# EUROPEAN PATENT SPECIFICATION

(11) **EP 3 474 292 B1**
(45) Date of publication and mention of the grant of the patent: **16.09.2020**
(21) Application number: 18201432.4
(22) Date of filing: 19.10.2018
(51) Int. Cl.: G21G 4/02, G01N 23/222

(54) **PHOTONEUTRON SOURCE AND NEUTRON INSPECTION SYSTEM**
PHOTONEUTRONENQUELLE UND NEUTRONENPRÜFSYSTEM
SOURCE DE PHOTONEUTRON ET SYSTÈME D'INSPECTION DE NEUTRONS

(30) Priority: 20.10.2017 CN 201710984433
(43) Date of publication of application: 24.04.2019
(73) Proprietor: Tsinghua University, Haidian District, Beijing 100084 (CN); Nuctech Company Limited, TongFang Building, Shuangqinglu, Haidian District Beijing 100084 (CN)
(72) Inventor: YANG, Yigang, Beijing 100084 (CN); WANG, Dongyu, Beijing 100084 (CN); YU, Hao, Beijing 100084 (CN); WANG, Weizhen, Beijing 100084 (CN); GUAN, Weiqiang, Beijing 100084 (CN); YIN, Wei, Beijing 100084 (CN); LI, Wei, Beijing 100084 (CN); SONG, Quanwei, Beijing 100084 (CN); LI, Yulan, Beijing 100084 (CN); ZONG, Chunguang, Beijing 100084 (CN); LIU, Yaohong, Beijing 100084 (CN); LI, Yuanjing, Beijing 100084 (CN); CHEN, Zhiqiang, Beijing 100084 (CN); ZHANG, Li, Beijing 100084 (CN); LI, Jianmin, Beijing 100084 (CN)
(74) Representative: Held, Stephan

(56) References cited:
- EP-A1- 3 296 770
- US-A- 5 903 622
- US-A1- 2015 194 229

## Description

### RELATED APPLICATION

The present application claims priority from Chinese application number CN201710984433.9 filed Oct. 20, 2017.

### FIELD OF THE INVENTION

The present disclosure relates to the technical field of radiation inspection, in particular to a photoneutron source and a neutron inspection system.

### BACKGROUND OF THE INVENTION

When a neutron reacts with different elements, photons having different characteristic energy are emitted. Based on the elemental content characteristics of the specific substances and the reaction mechanism of the neutron and the nucleus, by detecting the characteristic γ energy spectrum of the detected object, the elemental composition of the substance and the proportional relationship of elements are determined to distinguish between explosives, drugs or general organics, in high accuracy. For example, the elemental composition of explosives is usually C, H, N, O, and the content of N and O is relatively high, and the content of H and C is very small. In the preparation process of many drugs, the participation of chlorine-containing substances is required. Therefore, drugs/potential matters for preparation of drugs may be detected by analyzing the proportional relationship of elements such as H, N, and Cl.

Based on such advantages of neutrons as in great penetration and ability to perform element analysis, in the field of security inspection, neutrons may be used to identify substances within large containers and large vehicles, and to discriminate specific substances such as possible drugs or explosives.

The generation and transport of neutrons is the first step in the entire physical process when an object is inspected by neutrons. The neutron sources commonly used in the field of security inspection include isotope neutron sources and neutron generators, but these two neutron sources have respective shortcomings and drawbacks in terms of neutron yield and service life, and do not serve as the top option for quick inspection of large-volume objects.

A photoneutron source according to the prior art can be found in patent document US 5 903 622 A.

### SUMMARY OF THE INVENTION

It is an object of the present disclosure to provide a photoneutron source and a neutron inspection system which may directly output a desired neutron beam.

According to a first aspect of the present disclosure, there is provided a photoneutron source, comprising: an electron accelerating tube for accelerating an electron beam; an X-ray converting target, wherein the electron beam accelerated by the electron accelerating tube bombards the X-ray converting target to generate X-rays; a photoneutron target, wherein the X-ray enters the photoneutron target to generate photoneutrons; and a neutron modulation housing provided outside the photoneutron target and comprising a neutron collimation port for outputting photoneutrons; wherein the X-ray converting target is partially or entirely located within the photoneutron target.

Further, the neutron modulation housing is disposed outside the electron accelerating tube, the X-ray converting target, and the photoneutron target.

Further, the photoneutron target comprises a heavy water target or a beryllium target.

Further, the photoneutron target is a heavy water target which comprises a hermetic housing and heavy water enclosed within the hermetic housing, wherein the hermetic housing comprises a recess within which the X-ray converting target is partially or entirely situated.

Further, the heavy water target is a cylindrical target having an axis provided along an emitting direction of the electron beam of the electron accelerating tube.

Further, the electron accelerating tube, the X-ray converting target and the photoneutron target are arranged coaxially.

Further, the electron accelerating tube is located above the X-ray converting target and the photoneutron target, wherein the X-ray converting target is partially or entirely situated within an upper portion of the photoneutron target.

Further, the neutron modulation housing comprises a shielding layer for shielding X-rays, wherein the shielding layer is disposed outside the photoneutron target.

Further, the shielding layer is disposed outside the electron accelerating tube, the X-ray converting target, and the photoneutron target.

Further, the shielding layer comprises a first shield for shielding X-rays and shielding neutrons, and a second shield for shielding X-rays and transmitting neutrons.

Further, the first shield comprises a lead shield, and the second shield comprises a bismuth shield.

Further, the first shield and the second shield are made of the same shielding material, and the second shield has a thickness smaller than that of the first shield.

Further, the first shield and the second shield are lead shields.

Further, the shielding layer comprises a bismuth shielding layer or a bismuth alloy shielding layer.

Further, the first shield comprises a shielding cover provided outside the electron accelerating tube, the X-ray converting target and the photoneutron target, wherein the shielding cover has a neutron output port, and the second shield is disposed within the neutron output port and encloses the neutron output port.

Further, the neutron output port is located at a side of an emitting direction of the electron beam.

Further, the neutron modulation housing further comprises a neutron moderating layer provided outside the shielding layer to moderate photoneutrons and/or a neutron absorbing layer provided outside the shielding layer to absorb photoneutrons.

Further, the neutron modulation housing comprises the neutron moderating layer and the neutron absorbing layer disposed outside the neutron moderating layer.

Further, the neutron moderating layer comprises a graphite moderating layer or a heavy water moderating layer; and/or the neutron absorbing layer comprises a boron carbide absorbing layer, a paraffin absorbing layer, a boron-containing paraffin absorbing layer or a boron-containing polyethylene absorbing layer.

Further, the shielding layer comprises a first shield for shielding X-rays and shielding neutrons, and a second shield for shielding X-rays and transmitting neutrons; the neutron moderating layer comprises a first moderator and a second moderator having a thickness smaller than that of the first moderator, wherein the first moderator is disposed outside the first shield, and the second moderator is disposed outside the second shield.

Further, the shielding layer comprises a first shield for shielding X-rays and shielding neutrons, and a second shield for shielding X-rays and transmitting neutrons; the neutron absorbing layer has a neutron emitting opening provided outside the second shield.

Further, the neutron modulation housing further comprises a neutron collimator for controlling a neutron beam shape, wherein the neutron collimator is located within the neutron emitting opening, and the neutron collimator comprises the neutron collimation port.

Further, the photoneutron source further comprises a waveguide including a straight tube section connected to the electron accelerating tube and a guiding section connected to the straight tube section, wherein at least a portion of the guiding section defines an angle with the straight tube section.

Further, the waveguide penetrates into the neutron modulation housing.

According to a second aspect of the present disclosure, there is provided a neutron inspection system, comprising the photoneutron source according to any one of the first aspect of the present disclosure.

Further, the neutron inspection system is a vehicle-mounted inspection system.

Further, the emitting direction of the electron beam of the electron accelerating tube is perpendicular to the ground.

Based on the photoneutron source and the neutron inspection system provided by the present disclosure, the photoneutron source comprises an electron accelerating tube, an X-ray converting target, a photoneutron target, and a neutron modulation housing, so that it is possible to directly output a desired neutron beam from the neutron collimation port of the photoneutron source. Further, the photoneutron source which has a compact structure is easy and convenient to install and debug. The neutron inspection system which comprises the photoneutron source, has all the advantages possessed by a photoneutron source.

Other features of the present disclosure and advantages thereof will become explicit by means of the following detailed descriptions of the exemplary embodiments of the present disclosure with reference to the accompanying drawings.

### BRIEF DESCRIPTION OF THE ACCOMPANYING DRAWINGS

The accompanying drawings described herein are used to provide a further understanding of the present disclosure and constitute a part of the present application. The illustrative embodiments of the present disclosure as well as the illustrations thereof, which are used for explaining the present disclosure, do not constitute improper definitions on the present disclosure. In the drawings:

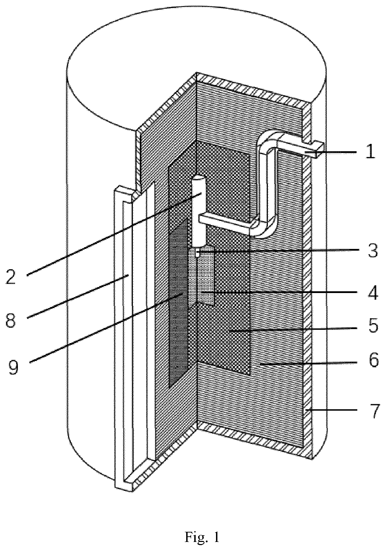

FIG. 1 is a schematic structural view of a photoneutron source according to an embodiment of the present disclosure.

### DETAILED DESCRIPTION OF THE PREFERRED EMBODIMENTS

Next, the technical solution in the embodiments of the present disclosure will be explicitly and completely described in combination with the accompanying drawings in the embodiments of the present disclosure. Apparently, the described embodiments are merely part of the embodiments of the present disclosure, rather than all the embodiments. The following descriptions of at least one exemplary embodiment which are in fact merely illustrative, by no means serve as any delimitation on the present disclosure as well as its application or use.

Unless additionally specified, the relative arrangements, numerical expressions and numerical values of the components and steps expounded in these examples do not limit the scope of the present disclosure. At the same time, it should be understood that, in order to facilitate the description, the dimensions of various parts shown in the drawings are not delineated according to actual proportional relations. The techniques, methods, and apparatuses known to a common technical person in the relevant art may not be discussed in detail, but where appropriate, techniques, methods, and apparatuses should be considered as part of the granted description. Among all the examples shown and discussed here, any specific value should be construed as being merely illustrative, rather than as a delimitation. Thus, other examples of exemplary embodiments may have different values. It should be noted that similar reference signs and letters present similar items in the following drawings, and therefore, once an item is defined in a drawing, there is no need for further discussion in the subsequent drawings.

In the description of the present disclosure, it is necessary to understand that, such wordings as "first" and "second" which are used to define the parts, are only intended to facilitate distinguishing the corresponding parts. Unless otherwise specified, the aforementioned wordings do not have particular meanings, and thus cannot be understood as limiting the protection scope of the present disclosure.

In the description of the present disclosure, it is necessary to understand that, the azimuth or positional relations indicated by such azimuth terms as "front, rear, up, down, left, right", "transverse, vertical, perpendicular, horizontal" and "top, bottom", which are usually based on the azimuth or positional relations illustrated by the drawings, are only for facilitating description of the present disclosure and simplifying the description. Unless otherwise specified, such azimuth terms do not indicate or imply that the device or element referred to has to present a particular azimuth or to be constructed and operated in a particular azimuth, so that it cannot be understood as limiting the protection scope of the present disclosure. The azimuth terms "within" and "outside" mean the interior and exterior relative to the contour of various members themselves.

FIG. 1 is a schematic structural view of a photoneutron source according to an embodiment of the present disclosure. As shown in FIG. 1, the photoneutron source of this embodiment mainly comprises an electron accelerating tube 2, an X-ray converting target 3, a photoneutron target 4, and a neutron modulation housing. The electron accelerating tube 2 is used to accelerate an electron beam. The electron beam accelerated by the electron accelerating tube 2 bombards the X-ray converting target 3 to generate X-rays. The X-ray enters the photoneutron target 4 to generate photoneutrons. The neutron modulation housing is disposed outside the photoneutron target 4, and the neutron modulation housing comprises a neutron collimation port for outputting photoneutrons.

The photoneutron source which integrates the electron accelerating tube 2, the X-ray converting target 3, the photoneutron target 4 and the neutron modulation housing, may directly output a required neutron beam from the neutron collimation port of the photoneutron source, so that the structure is compact and it is easy and convenient to install and debug.

In addition, as a new type of neutron source, photoneutron source has many advantages over other types of neutron sources, such as isotope neutron source and neutron generator, and it is possible to meet the requirements for quick inspection of large-volume objects. Among them:

For the field of inspecting specific objects and contrabands, inspection efficiency is an important factor. For this reason, for a neutron inspection system, it is necessary to ensure high neutron fluence rate within an inspection passageway, and thus the neutron source used needs to have a high neutron yield. For a high yield of photoneutrons a detection speed with respect to the neutron generator and the isotopic neutron source may be improved.

The photoneutron source has a long service life, while the commonly used isotopic neutron source such as 252Cf has a half-life of 2.65 years, and an ordinary neutron generator also has a service life of only over a thousand hours at the most.

The photoneutron source which is an electric ray source, has a favorable radiation safety without radiation in the transport, installation and debugging process.

Compared to the neutron generator, the photoneutron source which is less complex, has a low cost, and is easy to maintain.

The photoneutron source according to an embodiment of the present disclosure may be applied in the field of security inspection to identify specific substances such as potential drugs or explosives within large containers and large vehicles.

The embodiments of the present disclosure will be described in detail below in combination with FIG. 1.

As shown in FIG. 1, the photoneutron source of the present embodiment comprises a waveguide 1, an electron accelerating tube 2, an X-ray converting target 3, a photoneutron target 4, and a neutron modulation housing. The neutron modulation housing comprises a shielding layer, a neutron moderating layer 6, a neutron absorbing layer 7, and a neutron collimator 8.

In the photoneutron source the photoneutrons generated by X-rays from a pulse electron linac acting with the photoneutron target 4 are used as the neutron source. The generation of photoneutrons comprises such two processes as X-ray generation and photoneutron generation: the high-Z material as the X-ray converting target 3 is bombarded by a high-energy electron beam which is formed by accelerating electrons within the electron accelerating tube 2, and the electrons and the high-Z material are subjected to a bremsstrahlung action to generate high-energy X-rays. The high-energy X-ray after entering the photoneutron converting target 4 is subjected to a photoneutron reaction with the nucleus to generate photoneutrons.

The X-ray converting target 3 may be made, for example, of gold and tungsten.

As shown in FIG. 1, in the present example, the neutron modulation housing is disposed outside the electron accelerating tube 2, the X-ray converting target 3, and the photoneutron target 4. The arrangement which integrates the neutron modulation housing, the electron accelerating tube 2, the X-ray converting target 3 and the photoneutron target 4, makes the photoneutron source convenient to install and debug, in low radiation and high safety.

As shown in FIG. 1, in the present embodiment, the X-ray converting target 3 is entirely located within the photoneutron target 4. In other illustrated embodiments, the X-ray converting target 3 may be partially located within the photoneutron target 4.

Wherein, the photoneutron target 4 may be a heavy water target, or may be a beryllium target. Since the photoneutron reaction has an energy threshold, that is, the photoneutron reaction is likely to occur only when the energy of the photon is greater than the binding energy of the neutron in the nucleus, it is necessary to choose an appropriate photoneutron converting material to form the photoneutron target 4, so as to ensure that its reaction threshold is lower than the energy of the X-rays. The material typically selected is deuterium or beryllium, whose photon reaction thresholds are respectively 2.223 MeV and 1.67 MeV. In this embodiment, the photoneutron target 4 is a heavy water target.

As shown in FIG. 1, the photoneutron target is a heavy water target which comprises a hermetic housing and heavy water enclosed within the hermetic housing. The top of the hermetic housing comprises a recess within which the X-ray converting target 3 is situated. The hermetic housing may be, for example, an aluminum housing. In this embodiment, the X-ray converting target 3 protrudes into the heavy water target, and in the process of electron targeting, the X-rays during generation are encircled by heavy water. At the same time as the X-ray is generated, the X-ray whose energy is higher than the photoneutron reaction threshold may reacts with deuterium in heavy water to generate neutrons, so that the X-ray is adequately utilized.

In an embodiment not shown, the X-ray converting target 3 may also be partially located within the recess.

In this embodiment, the heavy water target is a cylindrical target having an axis provided along an emitting direction of the electron accelerating tube. The electron accelerating tube 2, the X-ray converting target 3, and the photoneutron target 4 are arranged coaxially.

As shown in FIG. 1, the electron accelerating tube 2 is located above the X-ray converting target 3 and the photoneutron target 4, wherein the X-ray converting target 3 is partially or entirely situated within an upper portion of the photoneutron target 4.

The shielding layer of the neutron modulation housing is configured to shield the X-ray. The shielding layer is disposed outside the photoneutron target 4. In this embodiment, the shielding layer is disposed outside the electron accelerating tube 2, the X-ray converting target 3, and the photoneutron target 4.

As shown in FIG. 1, the shielding layer comprises a first shield 5 for shielding X-rays and shielding neutrons, and a second shield 9 for shielding X-rays and transmitting neutrons.

Preferably, the first shield 5 comprises a lead shield; the second shield 9 comprises a bismuth shield.

In another preferred embodiment, the first shield 5 and the second shield 9 may use the same shielding material but use different thicknesses. For example, the first shield 5 and the second shield 9 may both be lead shields, wherein the second shield 9 is thinner than the first shield 5 in thickness. At this time, the first shield 5 has a large thickness and thus may shield X-rays and most neutrons, and the second shield 9 has a relatively small thickness, and thus may shield most X-rays and a minority of neutrons, while most neutrons may be output through the second shield 9.

In other embodiments, the first shield 5 may include a bismuth shield or a bismuth alloy shield; the second shield 9 may include a lead shield or a bismuth alloy shield or the like. It is necessary to beware of the addition of neutron sensitive nuclides when bismuth alloy is used.

Wherein, the first shield 5 comprises a shielding cover provided outside the electron accelerating tube 2, the X-ray converting target 3 and the photoneutron target 4, the shielding cover has a neutron output port, and the second shield 9 is disposed at the neutron output port and closes the neutron output port.

Preferably, the neutron output port is located at a side of the emitting direction of the electron beam. As shown in FIG. 1, in the present embodiment, the electron beam from the electron accelerating tube 2 is output downwards, is coaxial with the shielding layer, and the neutron output port is disposed on a lateral surface of the shielding layer. This arrangement allows that the photoneutron source may be arranged such that the emitting direction of the electron beam is directed towards the ground, thus reducing the protection needs for the top and bottom of the photoneutron source.

Preferably, the second shield 9 is a strip-like body that is vertically provided. This arrangement corresponds to the shape of the photon collimation port and is adapted to emit a fan beam.

The X-ray which may be generated in the process of generating neutrons by the photoneutron source, may cause an interference over the detection of the characteristic γ ray. The photoneutron source of this embodiment shields X-rays and neutrons around the photoneutron target 4 by using a lead shield and a bismuth shield. The lead shield is a commonly used X-ray shield, but it also has certain shielding effect on neutrons; the bismuth shield may shield X-rays and has no shielding effect on neutrons. Therefore, a bismuth shield is used at the part of the neutron output port, and a lead shield is used at other parts, for the purpose of effectuating that neutrons are output only from a forward collimation slit, without leakage of X-rays and with few leakage of neutrons in other directions.

In other embodiments not shown, the shielding layer may also be a single shield, such as a single bismuth shield, a bismuth alloy shield, or the like.

The neutron moderating layer 6 of the neutron modulation housing is disposed outside the shielding layer to moderate photoneutrons. In this embodiment, the neutron moderating layer 6 is a graphite moderating layer.

In other embodiments not shown, the neutron moderating layer may also be constructed of other materials. For example, it may also be a heavy water moderating layer or may be a combination of different moderating material layers. In the heavy water moderating layer, heavy water is accommodated within the hermetic housing.

As shown in FIG. 1, the neutron moderating layer 6 comprises a first moderator and a second moderator having a thickness smaller than the first moderator, wherein the first moderator is disposed outside the first shield 5, and the second moderator is disposed outside the second shield 9.

The neutron absorbing layer 7 is disposed outside the shielding layer to absorb the photoneutron. In this embodiment, the neutron absorbing layer 7 is disposed outside the neutron moderating layer 6; and the neutron absorbing layer 7 comprises a boron carbide absorbing layer. As shown in FIG. 1, the neutron absorbing layer 7 has a neutron emitting opening provided outside the second shield 9.

In other embodiments not shown, the neutron absorbing layer may also be made of other materials. For example, it may also be a paraffin absorbing layer, a boron-containing paraffin absorbing layer, a boron-containing polyethylene absorbing layer, or may be a combination of different absorbing material layers.

X-rays after being shielded by the lead shield, is substantially completely absorbed, but neutrons are only partially absorbed. Therefore, it is also necessary to moderate and absorb neutrons passing through the lead shield. It is also necessary to moderate the neutrons passing through the bismuth shield, such that neutrons outputting from the collimation slit are mostly thermal neutrons. In this embodiment, graphite is used to moderate neutrons, and neutrons collide with the carbon atoms in the graphite to lose energy and achieve the moderating purpose. In this embodiment, neutrons are absorbed by using boron carbide, wherein boron and thermal neutrons have a large reaction cross section, and thermal neutrons moderated by graphite react with boron in the boron carbide, and eventually are absorbed by boron carbide at outermost layer.

The neutron collimator 8 of the neutron modulation housing is used to control the neutron beam shape. The neutron collimator 8 is located within the neutron emitting opening. The neutron collimator 8 comprises a neutron collimation port. As shown in FIG. 1, in this embodiment, the neutron collimation port is a strip-like slit, and the corresponding neutron beam is a fan beam.

In other embodiments not shown, the neutron collimation port may have other shapes such as a circle and a square, and the corresponding neutron beam may be a pencil beam or the like.

Most of the neutrons emitted by the photoneutron source of this embodiment are thermal neutrons. Compared to fast neutrons, thermal neutrons and the elements of specific substances have a greater reaction cross section.

As shown in FIG. 1, the waveguide 1 penetrates into the neutron modulation housing. The waveguide 1 comprises a straight tube section connected to the electron accelerating tube 2 and a guiding section connected to the straight tube section, wherein at least a portion of the guiding section defines an angle with the straight tube section. This arrangement allows the rays to pass through the guiding section before outputting, i.e., they are steered relative to the straight tube section, thus reducing the environmental dose rate.

The embodiments of the present disclosure also provide a neutron inspection system comprising the aforementioned photoneutron source. The neutron inspection system of this embodiment has all the advantages of the aforementioned photoneutron source, and the description thereof will not be repeated here.

Preferably, the neutron inspection system is a vehicle-mounted inspection system. In the vehicle-mounted inspection system, the operating cabin and the neutron source may be integrated on the same chassis of the vehicle. Of course, the photoneutron source may also be applied to a neutron inspection device such as a combined type or a fixed type, in which there is certain safe distance between the operating cabin and the neutron source.

Preferably, the emitting direction of the electron beam of the electron accelerating tube 2 is perpendicular to the ground. Since the rear end surface of the electron accelerating tube 2 is hard to be shielded like the periphery of the electron accelerating tube 2, a large radiation dose may be generated in the backward direction of the electron beam. In this embodiment, the electron accelerating tube 2 is vertically disposed, the electron beam is accelerated downward, and the rear end is placed upward, so that only the radiation dose overhead is increased, and in the case where there is no staff performing overhead operation, it is unnecessary to expand the radiation protection area or increase the shielding means. With respect to the horizontal arrangement in the prior art, it is possible to avoid that the radiation protection area is enlarged or the shielding means is thickened, resulting from increased radiation dose in a horizontal direction.

Of course, in other embodiments not shown, the direction of the electron accelerating tube 2 may also be directed to directions other than the neutron beam as required.

According to the above descriptions, it can be known that the above embodiments of the present disclosure have at least one of the following technical effects:

The photoneutron source has the characteristics of high neutron yield, long service life, favorable radiation safety and less complexity. It can be applied in the neutron inspection system to discriminate specific substances such as potential drugs or explosives within large containers and large vehicles.

Compared with other types of neutron sources, it can improve the inspection speed and the inspection efficiency, without radiation in the transport, installation and debugging process, and is easy to maintain.

The photoneutron source can be applied to various neutron inspection devices. It can be applied not only to a neutron inspection device such as a combined type or a fixed type, in which there is certain safe distance between the operating cabin and the photoneutron source, but also to a vehicle-mounted neutron inspection system with high requirements for radiation safety. In the vehicle-mounted neutron inspection system, the operating cabin and the neutron source are integrated on the same chassis of vehicle. When the neutron inspection system works, it is still possible to ensure the radiation safety of the workers in the operating cabin.

All the components of the photoneutron source are integrated as a whole, and the photoneutron source directly emit thermal neutrons, which are collimated into a desired neutron beam, such as a fan beam, a pencil beam, etc., so that the structure is compact, and the installation and debugging are simple and convenient.

Finally, it should be noted that: the aforementioned embodiments are only used to describe the technical solution of the present disclosure rather than limiting the same.

## Claims

1. A photoneutron source, comprising:
an electron accelerating tube (2) for accelerating an electron beam;
an X-ray converting target (3), wherein the electron beam accelerated by the electron accelerating tube (2) bombards the X-ray converting target (3) to generate X-rays;
a photoneutron target (4), wherein the X-rays enter the photoneutron target (4) to generate photoneutrons; and
a neutron modulation housing provided outside the photoneutron target (4) and comprising a neutron collimation port for outputting photoneutrons;
**characterised in that** the X-ray converting target (3) is partially or entirely located within the photoneutron target (4).

2. The photoneutron source according to claim 1, wherein the neutron modulation housing is disposed outside the electron accelerating tube (2), the X-ray converting target (3), and the photoneutron target (4).

3. The photoneutron source according to any one of claim 1 or 2, wherein the photoneutron target (4) is a heavy water target which comprises a hermetic housing and heavy water enclosed within the hermetic housing, wherein the hermetic housing comprises a recess within which the X-ray converting target (3) is partially or entirely situated; wherein the heavy water target is a cylindrical target having an axis provided along an emitting direction of the electron beam of the electron accelerating tube (2).

4. The photoneutron source according to any one of claims 1 to 3, wherein the electron accelerating tube (2), the X-ray converting target (3) and the photoneutron target (4) are arranged coaxially.

5. The photoneutron source according to any one of claims 1 to 4, wherein the electron accelerating tube (2) is located above the X-ray converting target (3) and the photoneutron target (4), wherein the X-ray converting target (3) is partially or entirely situated within an upper portion of the photoneutron target (4).

6. The photoneutron source according to any one of claims 1 to 5, wherein the neutron modulation housing comprises a shielding layer for shielding X-rays, wherein the shielding layer is disposed outside the photoneutron target (4); wherein the shielding layer is disposed outside the electron accelerating tube (2), the X-ray converting target (3), and the photoneutron target (4).

7. The photoneutron source according to claim 6, wherein the shielding layer comprises a first shield (5) for shielding X-rays and shielding neutrons, and a second shield (9) for shielding X-rays and transmitting neutrons.

8. The photoneutron source according to claim 7, wherein the first shield (5) comprises a lead shield, and the second shield (9) comprises a bismuth shield.

9. The photoneutron source according to claim 7, wherein the first shield and the second shield are made of the same shielding material, and the second shield has a thickness smaller than that of the first shield.

10. The photoneutron source according to any one of claims 7 to 9, wherein the first shield (5) comprises a shielding cover provided outside the electron accelerating tube (2), the X-ray converting target (3), and the photoneutron target (4), wherein the shielding cover has a neutron output port, and the second shield (9) is disposed within the neutron output port and closes the neutron output port.

11. The photoneutron source according to claim 10, wherein the neutron output port is located at a side of an emitting direction of the electron beam.

12. The photoneutron source according to any one of claims 6 to 11, wherein the neutron modulation housing further comprises a neutron moderating layer (6) provided outside the shielding layer to moderate photoneutrons and/or a neutron absorbing layer (7) provided outside the shielding layer to absorb photoneutrons.

13. The photoneutron source according to claim 12, wherein the shielding layer comprises a first shield (5) for shielding X-rays and shielding neutrons, and a second shield (9) for shielding X-rays and transmitting neutrons; the neutron moderating layer (6) comprises a first moderator and a second moderator having a thickness smaller than that of the first moderator, wherein the first moderator is disposed outside the first shield (5), and the second moderator is disposed outside the second shield (9).

14. The photoneutron source according to claim 12, wherein the shielding layer comprises a first shield (5) for shielding X-rays and shielding neutrons, and a second shield (9) for shielding X-rays and transmitting neutrons; the neutron absorbing layer (7) has a neutron emitting opening provided outside the second shield (9).

15. The photoneutron source according to claim 14, wherein the neutron modulation housing further comprises a neutron collimator (8) for controlling a neutron beam shape, wherein the neutron collimator (8) is located within the neutron emitting opening, and the neutron collimator (8) comprises the neutron collimation port.

16. The photoneutron source according to any one of claims 1 to 15, further comprising a waveguide (1) including a straight tube section connected to the electron accelerating tube (2) and a guiding section connected to the straight tube section, wherein at least a portion of the guiding section defines an angle with the straight tube section; wherein the waveguide (1) penetrates into the neutron modulation housing.

17. A neutron inspection system, comprising a photoneutron source according to any one of claims 1 to 16.

## Patentansprüche

1. Photoneutronenquelle, umfassend:
eine Elektronenbeschleunigungsröhre (2) zum Beschleunigen eines Elektronenstrahls;
ein Röntgenumwandlungstarget (3), wobei der durch die Elektronenbeschleunigungsröhre (2) beschleunigte Elektronenstrahl das Röntgenumwandlungstarget (3) bombardiert, um Röntgenstrahlen zu erzeugen;
ein Photoneutronentarget (4), wobei die Röntgenstrahlen in das Photoneutronentarget (4) eintreten, um Photoneutronen zu erzeugen; und
ein Neutronenmodulationsgehäuse, das außerhalb des Photoneutronentargets (4) vorgesehen ist und einen Neutronenkollimationsport zur Abgabe von Photoneutronen umfasst,
**dadurch gekennzeichnet, dass** sich das Röntgenumwandlungstarget (3) teilweise oder vollständig innerhalb des Photoneutronentargets (4) befindet.

2. Photoneutronenquelle nach Anspruch 1, wobei das Neutronenmodulationsgehäuse außerhalb der Elektronenbeschleunigungsröhre (2), des Röntgenumwandlungstargets (3) und des Photoneutronentargets (4) angeordnet ist.

3. Photoneutronenquelle nach irgendeinem der Ansprüche 1 oder 2, wobei das Photoneutronentarget (4) ein Schwerwassertarget ist, das ein hermetisches Gehäuse und schweres Wasser, das in dem hermetischen Gehäuse eingeschlossen ist, umfasst, wobei das hermetische Gehäuse eine Aussparung umfasst, in der das Röntgenumwandlungstarget (3) teilweise oder vollständig angeordnet ist; wobei das Schwerwassertarget ein zylindrisches Target ist, das eine Achse aufweist, die entlang einer Emissionsrichtung des Elektronenstrahls der Elektronenbeschleunigungsröhre (2) vorgesehen ist.

4. Photoneutronenquelle nach irgendeinem der Ansprüche 1 bis 3, wobei die Elektronenbeschleunigungsröhre (2), das Röntgenumwandlungstarget (3) und das Photoneutronentarget (4) koaxial angeordnet sind.

5. Photoneutronenquelle nach irgendeinem der Ansprüche 1 bis 4, wobei sich die Elektronenbeschleunigungsröhre (2) über dem Röntgenumwandlungstarget (3) und dem Photoneutronentarget (4) befindet, wobei das Röntgenumwandlungstarget (3) sich teilweise oder vollständig in einem oberen Teil des Photoneutronentargets (4) befindet.

6. Photoneutronenquelle nach irgendeinem der Ansprüche 1 bis 5, wobei das Neutronenmodulationsgehäuse eine Abschirmschicht zum Abschirmen von Röntgenstrahlen umfasst, wobei die Abschirmschicht außerhalb des Photoneutronentargets (4) angeordnet ist; wobei die Abschirmschicht außerhalb der Elektronenbeschleunigungsröhre (2), des Röntgenumwandlungstargets (3) und des Photoneutronentargets (4) angeordnet ist.

7. Photoneutronenquelle nach Anspruch 6, wobei die Abschirmschicht eine erste Abschirmung (5) zum Abschirmen von Röntgenstrahlen und zur Abschirmung von Neutronen und eine zweite Abschirmung (9) zum Abschirmen von Röntgenstrahlen und zum Transmittieren von Neutronen umfasst.

8. Photoneutronenquelle nach Anspruch 7, wobei die erste Abschirmung (5) eine Bleiabschirmung umfasst und die zweite Abschirmung (9) eine Wismutabschirmung umfasst.

9. Photoneutronenquelle nach Anspruch 7, wobei die erste Abschirmung und die zweite Abschirmung aus dem gleichen Abschirmmaterial sind und die zweite Abschirmung eine Dicke aufweist, die kleiner als die der ersten Abschirmung ist.

10. Photoneutronenquelle nach irgendeinem der Ansprüche 7 bis 9, wobei die erste Abschirmung (5) eine Abschirmabdeckung umfasst, die außerhalb der Elektronenbeschleunigungsröhre (2), des Röntgenumwandlungstargets (3) und des Photoneutronentargets (4) vorgesehen ist, wobei die Abschirmabdeckung einen Neutronenausgangsport aufweist und die zweite Abschirmung (9) innerhalb des Neutronenausgangsports angeordnet ist und den Neutronenausgangsport schließt.

11. Photoneutronenquelle nach Anspruch 10, wobei sich der Neutronenausgangsport an einer Seite einer Emissionsrichtung des Elektronenstrahls befindet.

12. Photoneutronenquelle nach irgendeinem der Ansprüche 6 bis 11, wobei das Neutronenmodulationsgehäuse ferner eine Neutronenmoderationsschicht (6), die außerhalb der Abschirmschicht vorgesehen ist, um Photoneutronen zu moderieren, und/oder eine Neutronenabsorptionsschicht (7), die außerhalb der Abschirmschicht vorgesehen ist, um Photoneutronen zu absorbieren, umfasst.

13. Photoneutronenquelle nach Anspruch 12, wobei die Abschirmschicht eine erste Abschirmung (5) zum Abschirmen von Röntgenstrahlen und zum Abschirmen von Neutronen und eine zweite Abschirmung (9) zum Abschirmen von Röntgenstrahlen und zum Transmittieren von Neutronen umfasst; wobei die Neutronenmoderationsschicht (6) einen ersten Moderator und einen zweiten Moderator mit einer Dicke, die kleiner als die des ersten Moderators ist, umfasst, wobei der erste Moderator außerhalb der ersten Abschirmung (5) angeordnet ist und der zweite Moderator außerhalb der zweiten Abschirmung (9) angeordnet ist.

14. Photoneutronenquelle nach Anspruch 12, wobei die Abschirmschicht eine erste Abschirmung (5) zum Abschirmen von Röntgenstrahlen und zum Abschirmen von Neutronen und eine zweite Abschirmung (9) zum Abschirmen von Röntgenstrahlen und zum Transmittieren von Neutronen umfasst; wobei die Neutronenabsorptionsschicht (7) eine Neutronen emittierende Öffnung aufweist, die außerhalb der zweiten Abschirmung (9) vorgesehen ist.

15. Photoneutronenquelle nach Anspruch 14, wobei das Neutronenmodulationsgehäuse ferner einen Neutronenkollimator (8) zum Steuern einer Neutronenstrahlform umfasst, wobei sich der Neutronenkollimator (8) innerhalb der Neutronen emittierenden Öffnung befindet und der Neutronenkollimator (8) den Neutronenkollimationsport umfasst.

16. Photoneutronenquelle nach irgendeinem der Ansprüche 1 bis 15, ferner umfassend einen Wellenleiter (1), der einen geraden Rohrabschnitt umfasst, der mit der Elektronenbeschleunigungsröhre (2) verbunden ist, und einen Führungsabschnitt, der mit dem geraden Rohrabschnitt verbunden ist, wobei mindestens ein Teil des Führungsabschnitts einen Winkel mit dem geraden Rohrabschnitt definiert; wobei der Wellenleiter (1) in das Neutronenmodulationsgehäuse eindringt.

17. Neutroneninspektionssystem, umfassend eine Photoneutronenquelle nach irgendeinem der Ansprüche 1 bis 16.

## Revendications

1. Source de photoneutrons, comprenant :
un tube d'accélération d'électrons (2) pour accélérer un faisceau d'électrons ;
une cible de conversion de rayons X (3), de sorte que le faisceau d'électrons accéléré par le tube d'accélération d'électrons (2) bombarde la cible de conversion de rayons X (3) pour générer des rayons X ;
une cible de photoneutrons (4), dans laquelle les rayons X entrent dans la cible de photoneutrons (4) pour générer des photoneutrons ; et
un boîtier de modulation de neutrons prévu à l'extérieur de la cible de photoneutrons (4) et comprenant un orifice de collimation de neutrons pour sortir des photoneutrons ;
**caractérisée en ce que**
la cible de conversion de rayons X (3) est partiellement ou entièrement située à l'intérieur de la cible de photoneutrons (4).

2. Source de photoneutrons selon la revendication 1, dans laquelle le boîtier de modulation de neutrons est disposé à l'extérieur du tube d'accélération d'électrons (2), de la cible de conversion de rayons X (3), et de la cible de photoneutrons (4).

3. Source de photoneutrons selon l'une quelconque des revendications 1 ou 2, dans laquelle la cible de photoneutrons (4) est une cible à eau lourde qui comprend un boîtier hermétique et de l'eau lourde enfermée à l'intérieur du boîtier hermétique, dans laquelle le boîtier hermétique comprend un évidement à l'intérieur duquel la cible de conversion de rayons X (3) est partiellement ou entièrement située ; dans laquelle la cible à eau lourde est une cible cylindrique ayant un axe prévu le long d'une direction d'émission du faisceau d'électrons du tube d'accélération d'électrons (2).

4. Source de photoneutrons selon l'une quelconque des revendications 1 à 3, dans laquelle le tube d'accélération d'électrons (2), la cible de conversion de rayons X (3) et la cible de photoneutrons (4) sont agencé(e)s coaxialement.

5. Source de photoneutrons selon l'une quelconque des revendications 1 à 4, dans laquelle le tube d'accélération d'électrons (2) est situé au-dessus de la cible de conversion de rayons X (3) et de la cible de photoneutrons (4), dans laquelle la cible de conversion de rayons X (3) est située partiellement ou entièrement à l'intérieur d'une portion supérieure de la cible de photoneutrons (4).

6. Source de photoneutrons selon l'une quelconque des revendications 1 à 5, dans laquelle le boîtier de modulation de neutrons comprend une couche écran pour faire écran aux rayons X, dans laquelle la couche écran est disposée à l'extérieur de la cible de photoneutrons (4) ; dans laquelle la couche écran est disposée à l'extérieur du tube d'accélération d'électrons (2), de la cible de conversion de rayons X (3), et de la cible de photoneutrons (4).

7. Source de photoneutrons selon la revendication 6, dans laquelle la couche écran comprend un premier écran (5) pour faire écran aux rayons X et pour faire écran aux neutrons, et un second écran (9) pour faire écran aux rayons X et pour transmettre des neutrons.

8. Source de photoneutrons selon la revendication 7, dans laquelle le premier écran (5) comprend un écran en plomb, et le second écran (9) comprend un écran en bismuth.

9. Source de photoneutrons selon la revendication 7, dans laquelle le premier écran et le second écran sont réalisés avec le même matériau formant écran, et le second écran a une épaisseur plus faible que celle du premier écran.

10. Source de photoneutrons selon l'une quelconque des revendications 7 à 9, dans laquelle le premier écran (5) comprend un couvercle écran prévu à l'extérieur du tube d'accélération d'électrons (2), de la cible de conversion de rayons X (3), et de la cible de photoneutrons (4), dans laquelle le couvercle écran comporte un orifice de sortie de neutrons, et le second écran (9) est disposé à l'intérieur de l'orifice de sortie de neutrons et ferme l'orifice de sortie de neutrons.

11. Source de photoneutrons selon la revendication 10, dans laquelle l'orifice de sortie de neutrons est situé sur un côté d'une direction d'émission du faisceau d'électrons.

12. Source de photoneutrons selon l'une quelconque des revendications 6 à 11, dans laquelle le boîtier de modulation de neutrons comprend en outre une couche de modération de neutrons (16) prévue à l'extérieur de la couche écran pour modérer les photoneutrons et/ou une couche d'absorption de neutrons (7) prévue à l'extérieur de la couche écran pour absorber les photoneutrons.

13. Source de photoneutrons selon la revendication 12, dans laquelle la couche écran comprend un premier écran (5) pour faire écran aux rayons X et faire écran aux neutrons, et un second écran (9) pour faire écran aux rayons X et transmettre les neutrons, la couche de modération de neutrons (6) comprend un premier modérateur et un second modérateur ayant une épaisseur plus faible que celle du premier modérateur, dans laquelle le premier modérateur est disposé à l'extérieur du premier écran (5), et le second modérateur est disposé à l'extérieur du second écran (9).

14. Source de photoneutrons selon la revendication 12, dans laquelle la couche écran comprend un premier écran (5) pour faire écran aux rayons X et pour faire écran aux neutrons, et un second écran (9) pour faire écran aux rayons X et transmettre les neutrons ; la couche d'absorption de neutrons (7) ayant une ouverture d'émission de neutrons prévue à l'extérieur du second écran (9).

15. Source de photoneutrons selon la revendication 14, dans laquelle le boîtier de modulation de neutrons comprend en outre un collimateur de neutrons (8) pour commander une forme du faisceau de neutrons, dans laquelle le collimateur de neutrons (8) est situé à l'intérieur de l'ouverture d'émission de neutrons, et le collimateur de neutrons (8) comprend l'orifice de collimation de neutrons.

16. Source de photoneutrons selon l'une quelconque des revendications 1 à 15, comprenant en outre un guide d'onde (1) incluant un tronçon de tube rectiligne connecté au tube d'accélération d'électrons (2) et un tronçon de guidage connecté au tronçon de tube rectiligne, dans laquelle au moins une portion du tronçon de guidage définit un angle avec le tronçon de tube rectiligne ; dans laquelle le guide d'onde (1) pénètre dans le boîtier de modulation de neutrons.

17. Système d'inspection par neutrons, comprenant une source de photoneutrons selon l'une quelconque des revendications 1 à 16.
